# EUROPÄISCHE PATENTSCHRIFT

(11) **EP 0 958 979 B1**
(45) Veröffentlichungstag und Bekanntmachung des Hinweises auf die Patenterteilung: **17.03.2004**
(21) Anmeldenummer: 99109723.9
(22) Anmeldetag: 18.05.1999
(51) Int. Cl.: B60T 10/02, B60T 1/087

(54) **Bremsanlage, insbesondere für ein Kraftfahrzeug**
Brake system, especially for a motor vehicle
Système de freinage, notamment pour un véhicule automobile

(30) Priorität: 18.05.1998 DE 19822225
(43) Veröffentlichungstag der Anmeldung: 24.11.1999
(73) Patentinhaber: Voith Turbo GmbH & Co. KG, 89522 Heidenheim (DE)
(72) Erfinder: Adams, Werner, 74564 Crailsheim (DE)
(74) Vertreter: Dr. Weitzel & Partner

(56) Entgegenhaltungen:
- DE-C- 3 713 580
- US-A- 3 888 335
- US-A- 4 175 647

## Beschreibung

Die Erfindung betrifft eine Bremsanlage mit einem hydrodynamischen Retarder. Auf den Oberbegriff von Anspruch 1 wird verwiesen.

Solche Bremsanlagen sind aus einer Vielzahl von Veröffentlichungen bekanntgeworden. Nur beispielsweise wird verwiesen auf
(1) DE 37 13 580 C1
(2) DE-AS 19 46 167
(3) US 4 726 255
(4) US 3 720 372.
(5) US 4 175 647

Retarder werden bei schweren Fahrzeugen vor allem eingesetzt, um die insbesondere bei Bremsung aus hoher Fahrgeschwindigkeit (Anpassungsbremsung) anfallende kinetische Bremsenergie aufzunehmen und in Wärme umzusetzen, aber auch für geforderte Dauerbremsleistungen sind Retarder gut geeignet, beispielsweise bei einer konstanten Geschwindigkeit von 30 km/h und bei einem Gefälle von 7 %. Als Betriebsflüssigkeit dient in der Regel Öl. Die im Retarder an die Betriebsflüssigkeit übergegangene Wärme muß mittels eines speziellen Wärmetauschers dem Kühlmittel oder der Umgebungsluft zugeführt werden.

Eines von zahlreichen Problemen solcher Bremsanlagen besteht im Ein- und Ausschalten des Retarders. Eine bekannte Möglichkeit besteht darin, den Retarder nur für den Zweck des Bremsens mit Arbeitsmittel zu füllen, im übrigen aber ungefüllt zu lassen. Eine weitere Möglichkeit besteht darin, den Retarder mechanisch in den Arbeitsstrang ein- bzw. auszuschalten.

Im vorliegenden Falle wird von einer solchen Bremsanlage ausgegangen, bei welcher der Retarder zum Zwecke des Bremsens mit Arbeitsmittel gefüllt wird, und bei dem das Arbeitsmittel für den Nicht-Brems-Betrieb aus dem Arbeitsraum des Retarders wieder herausgeführt wird.

US 4 175 647 zeigt eine Retarder füllpumpe, ohne Zweiteiligen Behälter.

Wendet man dieses Prinzip des Füllens und Entleerens an, so kommen wiederum zwei Systeme in Betracht. Das erste System umfaßt einen Füllzylinder, mit welchem dem Retarder zum Zwecke des Bremsens ein gewisses Quantum des Arbeitsmittels zugeführt wird. Dieses System kann mit oder ohne Füllpumpe arbeiten. Dieses System hat den Nachteil eines verhältnismäßig hohen baulichen Aufwandes. Außerdem weist das System Dichtungen auf, die dem Verschleiß ausgesetzt sind. Soweit das System eine Pumpe verwendet, besteht ein Nachteil in einer Verzögerung zwischen dem Einschalten der Pumpe und dem Wirksamwerden der Beschickung des Arbeitsraumes des Retarders, somit in einer Ansprechträgheit. Wird keine Pumpe verwendet, so ist das System mit einer Hysterese behaftet, so daß die Arbeitsweise nicht exakt reproduzierbar ist.

Ein zweites System verwendet einen Behälter, der das Arbeitsmittel aufnimmt Zum Zwecke des Bremsens wird der Spiegel des Arbeitsmittels mit Druckluft beaufschlagt, so daß das Arbeitsmittel durch eine Zufuhrleitung zum Arbeitsraum des Retarders gedrückt wird. Der Spiegel ist offen. Daher bildet sich ein Arbeitsmittel-Luft-Gemisch. Die beiden Gemischbestandteile, nämlich Arbeitsmittel und Luft, müssen voneinander getrennt werden. Dies gilt insbesondere dann, wenn als Arbeitsmittel ein Öl verwendet wird, was sehr üblich ist. Diese Lösung hat den Nachteil eines erheblichen konstruktiven Aufwandes, eines großen Bauvolumens sowie langer Reaktionszeiten.

Der Erfindung liegt die Aufgabe zugrunde, eine Bremsanlage gemäß dem Oberbegriff von Anspruch 1 zu schaffen, bei der insbesondere das Füllen, aber auch das Entleeren des Arbeitsraumes des Retarders rasch, d.h. ohne lange Ansprechzeiten sowie hysteresefrei erfolgt, bei dem ferner das Problem des Trennens des Arbeitsmittel-Luft-Gemisches reduziert wird, und das einen geringen konstruktiven Aufwand, wenig Einzelteile sowie ein geringes Bauvolumen aufweist.

Diese Aufgabe wird durch die Merkmale von Anspruch 1 gelöst.

Die Lösung ist verblüffend einfach. Sie arbeitet praktisch verschleißfrei; die hierbei verwendete Membran unterliegt nur verhältnismäßig geringen Verformungen. Die Merkmale der Erfindung lassen sämtliche Ausgestaltungen einer modernen Bremsanlage zu, beispielsweise der Kühlung des Arbeitsmittels durch eine entsprechende Kühlanlage.

Die Erfindung ist anhand der Zeichnung näher erläutert. Darin ist im einzelnen folgendes dargestellt:
- Fig. 1: zeigt schematisch eine Bremsanlage gemäß der Erfindung;
- Fig. 2: zeigt eine weitere erfindungsgemäße Bremsanlage mit genauerer Darstellung von Einzelteilen;
- Figuren 3, 4 und 5: zeigen drei verschieden Formen des Ausgleichsbehälters;
- Fig. 6: verdeutlicht anhand eines Ausschnittes aus einer Ausführung gemäß Fig. 1 die Möglichkeit einer aufgeteilten Steuerluftzuführung und zwei Membranen;
- Fig. 7: verdeutlicht schematisch eine weitere Ausführung einer Bremsanlage mit zwei Membranen.

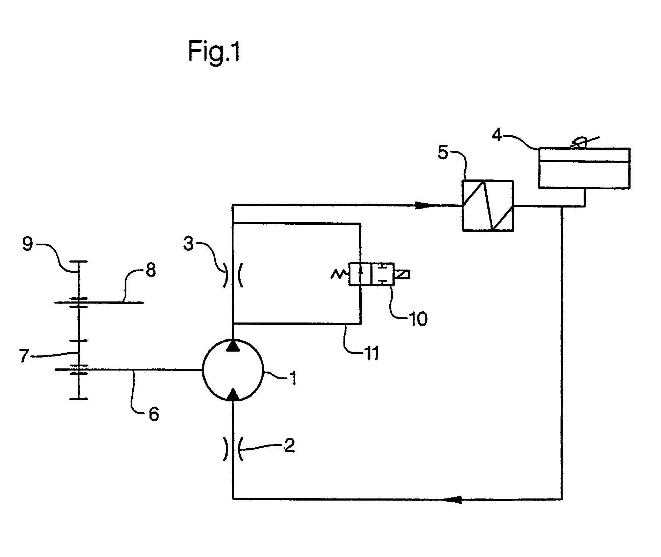

Fig. 1 zeigt den Kreislauf eines hydrodynamischen Retardersystems mit einem Retarder 1, einer Einlaßdrossel 2, einer Auslaßdrossel 3, einem Ausgleichsbehälter 4 und einem Kühler 5. Auf der Retarderwelle 6 sitzt ein Ritzel 7. Dieses kämmt mit einem Zahnrad 9, das seinerseits auf einer Getriebe-Abtriebswelle 8 aufgekeilt ist.

Es ist eine Bypassleitung 11 vorgesehen, mit der sich die Auslaßdrossel 3 umgehen läßt. In der Bypassleitung 11 befindet sich ein Zwei/Zwei-Wege-Ventil 10. Hiermit läßt sich die Bypassleitung 11 mehr oder minder öffnen, so wie hier gezeigt. Die Arbeitsflüssigkeit strömt somit auch durch die Bypassleitung 11, und nicht nur durch die Auslaßdrossel 3. Auf diese Weise wird das vom Retarder erzeugte Bremsmoment entsprechend abgesenkt. Dieser Vorgang vermeidet in vorteilhafter Weise eine große Schaltarbeit.

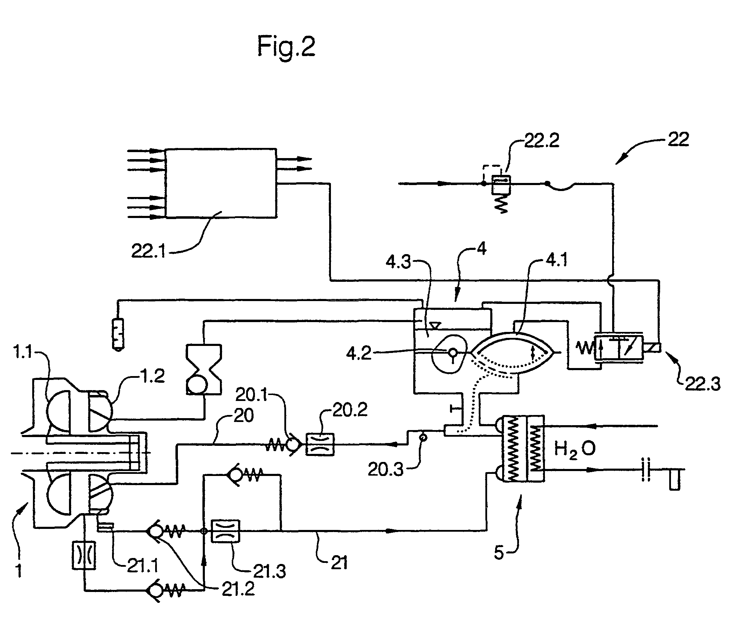

Aus Fig. 2 lassen sich weitere Einzelheiten erkennen.

Entscheidendes Bauteil ist der Ausgleichsbehälter 4. Dieser ist über eine Zufuhrleitung 20 sowie über eine Abführleitung 21 an den Arbeitsraum des Retarders 1 angeschlossen. Die Zufuhrleitung 20 enthält u. a. ein Rückschlagventil 20.1, eine Einlaßdrossel 20.2 und einen Drucksensor 20.3.

Die Abfuhrleitung 21 enthält einen Temperaturgeber 21.1, ein Rückschlagventil 21.2, eine Auslaßdrossel 21.3 sowie den Wärmetauscher 5.

Der Ausgleichsbehälter 4 weist als entscheidendes Bauteil eine Membran 4.1 auf. Diese ist beaufschlagbar mittels eines Steuermediums, im vorliegenden Falle mittels Luft, das mit Hilfe einer Steuerschaltung 22 aufgebracht wird. Bei der Steuerschaltung erkennt man u.a. ein elektrisches Steuergerät 22.1, ein Druckminderventil 22.2 sowie ein Druckregelventil 22.3.

Der Ausgleichsbehälter weist ein Rückschlagventil 4.2 auf. Dieses erlaubt ein Übertreten in einen Nebenraum 4.3 des Ausgleichsbehälters 4.

Beim Bremsbetrieb wird die Membran 4.1 mittels des Steuermediums aus der Steuerschaltung 22 druckbeaufschlagt. Hierdurch wird Arbeitsmittel, im vorliegenden Falle Öl, durch die Zufuhrleitung 20 in den Arbeitsraum gedrückt.

Das Rückschlagventil 4.2 ist derart gesteuert, daß es bei Druckbeaufschlagung der Membran 4.1 sofort absperrt, und erst nach Druckentlastung wieder öffnet. Es kann in einer weiteren Ausführung auch als fremdgesteuertes Ventil ausgebildet sein, welches nach einer für den Retarderbetrieb sinnvollen Logik angesteuert wird. Eine derartige Ausführung kann dabei wie folgt beschrieben werden:
Für eine Retarderbremsung wird Betriebsflüssigkeit mittels Steuerluftdruck hinter der Membrane 4.1 aus dem Vorratsbehälter 4 in den Retarderkreislauf 26, d.h. u. a. den Arbeitsraum des Retarders 1 gedrückt und dabei unter Überdruck gehalten. Die im Kreislauf befindliche Luft wird dabei wenigstens teilweise mittels einer Kernringentlüftung 25 aus dem Kreislauf 26 gedrückt und teilweise infolge des Überdruckes in der Betriebsflüssigkeit gelöst, da das Lösungsvermögen von Flüssigkeiten, hier Retarder-Öl, mit ansteigendem Druck zunimmt. Bei den üblicherweise in Retardem eingesetzten Retarder-Ölen geht pro bar Luftdruck etwa 10% des Betriebsflüssigkeitsvolumens an Luft in Lösung. Bei Retardem ohne Kernringentlüftung geht alle Luft in Lösung bzw. wird, wenn das Lösungsvermögen erschöpft ist, in kleinen Luftbläschen in der Betriebsflüssigkeit verteilt Nach Beendigung des Bremsvorganges wird der Steuerluftdruck hinter der Membrane 4.1 wieder zurückgenommen und die Betriebsflssigkeit wieder in den Vorratsbehälter 4 gefördert. Da in diesem Betriebsbereich kein Überdruck mehr ansteht, tritt die in der Betriebsflüssigkeit gelöste Luft wieder aus und es bilden sich Bläschen, die das Volumen der zurückfließenden Betriebsflüssigkeit erhöhen. Des weiteren trägt die Erwärmung der Betriebsflüssigkeit zur Volumenzunahme bei. Dieses Mehrvolumen der Betriebsflüssigkeit wird nach Abschluß einer Bremsung über das Rückschlagventil 4.2 in den Ausgleichsbehälter 4.3 geleitet. Erfolgt in kurzem Abstand nach Beendigung eines Bremsvorganges eine weitere Bremsung, so daß die Betriebsflüssigkeit im Vorratsbehälter bei Beginn der weiteren Bremsung noch mit Luftblasen angereichert ist, wird die Luft in diesen Luftblasen mittels des Steuerluftdruckes wieder in dem Betriebsmedium gelöst und damit das Volumen des Betriebsmediums reduziert. Somit ergibt sich, daß der mögliche Hub der Membrane 4.1 entsprechend größer auszulegen ist, als das für einen reinen Füllvorgang errechnete Volumen. Unter der Annahme, daß bei den im Retarder üblicherweise zum Einsatz gelangenden Ölen pro bar Luftdruck etwa 10% des Betriebsflüssigkeitsvolumens an Luft in Lösung gehen und die möglichen Steuerdrücke in einem Bereich von einschließlich 1 bar bis 8 bar liegen, liegt das erforderliche Mindestmembranvolumen bei dem etwa 1,1 bis 1,8-fachen des rechnerisch ermittelbaren Füllvolumens.

Vergrößert sich der zeitliche Abstand zwischen zwei aufeinanderfolgenden Bremsvorgängen, steigen die Luftblasen in der Betriebsflüssigkeit an die Oberfläche und es bildet sich wenigstens eine Luftblase am Rückschlagventil 4.2 aus, so daß ein Austausch mit dem Ausgleichsbehälter 4.3 möglich wird. D.h., daß die Luft im Ausgleichsbehälter 4.3 aufsteigen und Öl aus dem Ausgleichsbehälter in den Vorratsbehälter 4 fließen kann. Vorzugsweise werden die zur Beeinflußbarkeit der Betriebsmittelversorgung erforderlichen Wirkquerschnitte am Rückschlagventil 2.3 derart gewählt, daß der Austausch langsam erfolgt. Für den Fall, daß dieser Austausch mit Beginn der darauf folgenden Bremsung noch nicht abgeschlossen ist, wird die noch anstehenden Luft zunächst durch das Rückschlagventil 4.2 in den Ausgleichsbehälter 4.3 gedrückt, bis die nachfolgende Betriebsflüssigkeit aufgrund größerer Masse und Zähigkeit das Rückschlagventil 4.2 sofort zum Schließen bringt.

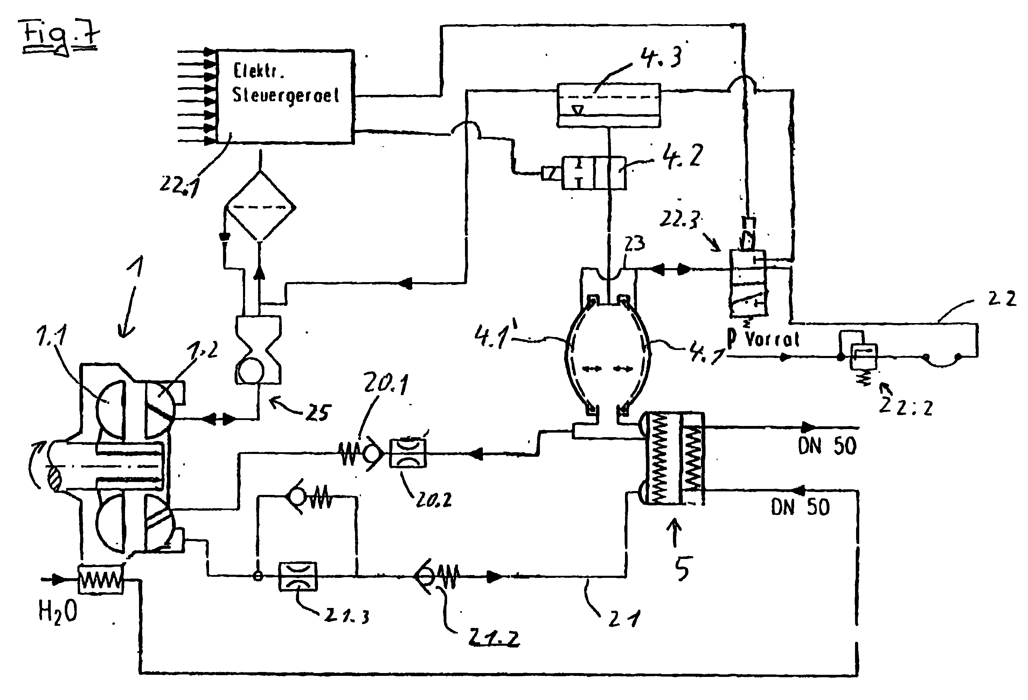

Auch bei Ausbildung des Rückschlagventiles 4.2 wie auch in der Fig. 7 dargestellt als fremdbetätigbares Ventil, wird ein zeitverzögertes Schalten des fremdbetätigbaren Ventils 4.2 ebenfalls die widerstandsarm fließende Luft noch in den Ausgleichsbehälter 4.3 fliessen lassen, während der immer kleiner werdende Querschnitt des schließenden fremdbetätigbaren Ventils 4.2 die nach der Luft nachfließende Flüsigkeit nicht mehr in nennenswerten Umfang durchläßt. Die Betriebsflüssigkeit wird somit immer wieder von der Luft getrennt und belastet den Kreislauf nicht mit zusätzlichen Luftanteilen, die den Bremsbetrieb stören können.

Das Rückschlagventil 4.2 öffnet nach einer erfolgten Bremsung erst dann erneut, wenn die Membrane 4.1 in den Ausgangszustand zurückgedrückt wird, da erst zu diesem Zeitpunkt der Druck im Vorratsbehälter soweit abgenommen hat und damit die Schließwirkung des Rückschlagventiles aufgehoben ist.

Auch wenn das Rückschlagventil 4.2 entsprechend der Ausführung gemäß Fig. 7 als fremdbetätigtes Ventil ausgebildet ist, wird ein zeitverzögertes Schalten des fremdbetätigten Ventils 4.2 verhindern, daß unzulässig viel Betriebsmedium in den Ausgleichsbehälter fließt, bevor die beiden Membranen 4.1 und 4.1' in den Ausgangszustand gedrückt wird.

Durch die Membran bzw. die Membranen bleiben Arbeitsmittel einerseits und Steuermedium andererseits voneinander getrennt. Es kommt somit zu keinem Mischen dieser beiden Komponenten, und es bedarf somit auch keiner nachträglichen Trennung.

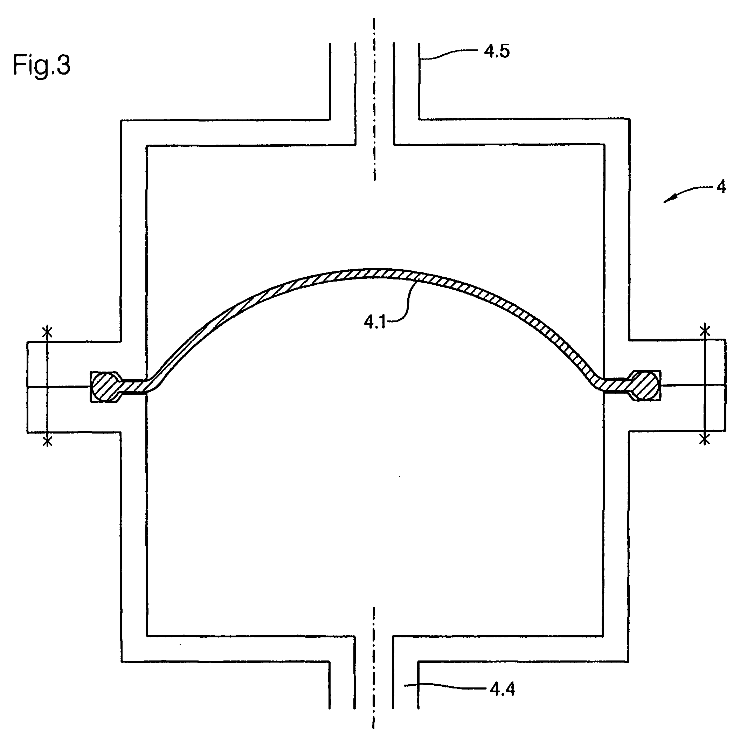

Bei dem in Figur 3 dargestellten Ausgleichsbehälter ist die Membran 4.1 derart eingespannt, daß sie den Innenraum des Ausgleichsbehälters 4 in zwei Räume unterteilt. Hierdurch werden das Retarder-Arbeitsmedium und das Steuermedium voneinander getrennt. Dabei befindet sich der Anschluß 4.4 für das Retarder-Arbeitsmedium unten, und der Anschluß 4.5 in der dargestellten Ausführungsform oben.

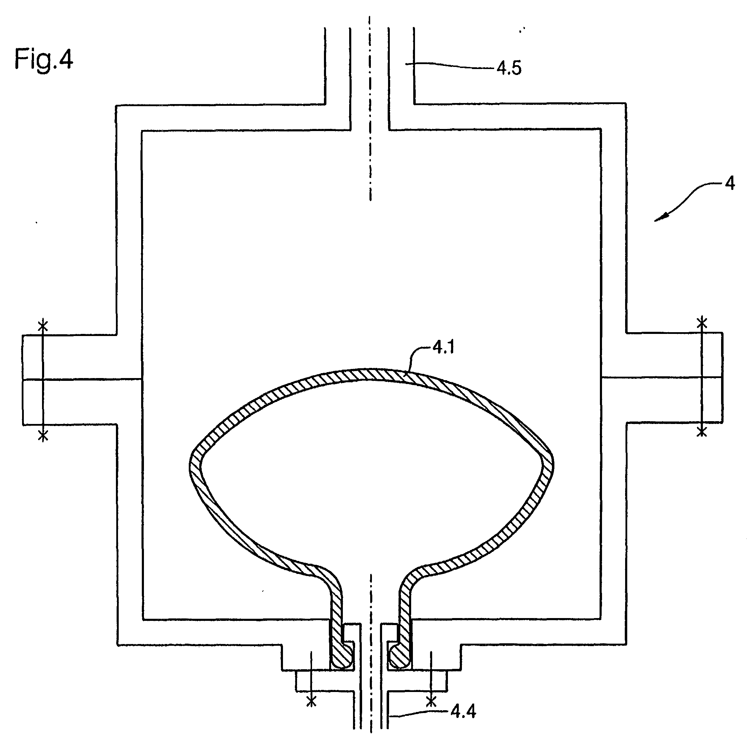

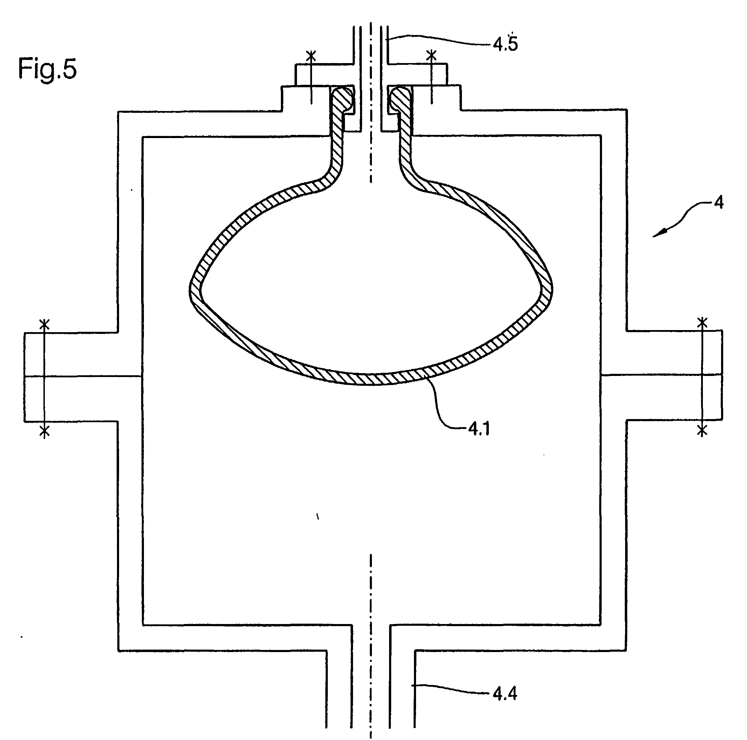

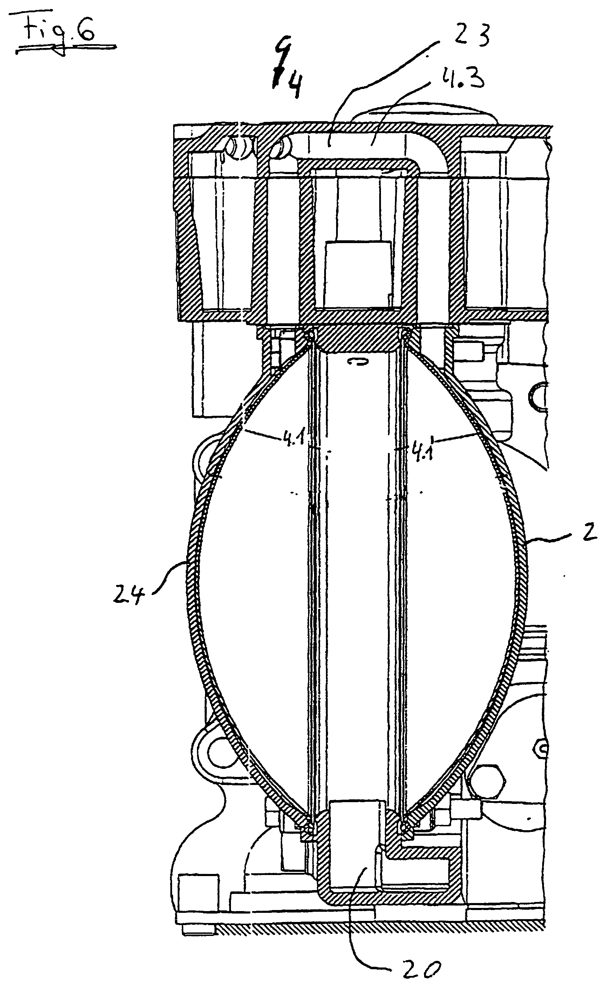

Bei den in den Figuren 4 und 5 dargestellten Ausführungsformen ist die Membran 4.1 jeweils zu einem Behälter geformt, der eine Ballongestalt haben kann. Bei der Ausführungsform gemäß Figur 4 dient der genannte Ballon zur Aufnahme des Retardermediums, und bei der Ausführungsform gemäß Figur 5 dient er zur Aufnahme des Steuermediums. Demgegenüber zeigt Figur 6 eine konstruktive Ausführung eines Behälters 4 mit zwei Membranen 4.1 und 4.1', wie in einer Ausführung der Bremsanlage gemäß Fig. 7 verwendet, die von einer beiden gemeinsam zugeordneten Steuerdruckleitung 23 beaufschlagbar sind.

## Patentansprüche

1. Bremsanlage, insbesondere für ein Kraftfahrzeug
1.1 mit einem hydrodynamischen Retarder (1 ), der ein Rotorschaufelrad (1.1) sowie ein Statorschaufelrad (1.2) aufweist;
1.2 mit einem Leitungssystem (20, 21) zum Zuführen bzw. Abführen von Arbeitsmittel zum Retarder bzw. vom Retarder;
1.3 mit einem Behälter (4) zur Aufnahme von Arbeitsmittel;
1.4 mit einem System zum Ausüben eines Druckes auf das im Behälter (4) enthaltene Arbeitsmittel zwecks Veränderns des Füllungsgrades des Arbeitsraumes des Retarders (1);
1.5 der Spiegel des Arbeitsmediums im Behälter (4) ist von einer Membran (4.1) abgedeckt;
1.6 der Aktuator umfaßt ein Steuersystem (22) zum Aufbringen eines Steuermediums auf die dem Flüssigkeitsspiegel abgewandte Seite der Membran (4.1);
1.7 der Behälter (4) ist an einen Nebenbehälter (4.3) angeschlossen, der als Ausgleichsbehälter dient, und in der Verbindungsleitung zwischen Behälter (4) und Ausgleichsbehälter (4.3) ist ein Ventil (4.2) vorgesehen, das bei Beaufschlagen der Membran (4.1) mit Steuermedium absperrt;
1.8 die Membran (4.1) ist derart ausgelegt, daß das Membranhubvolumen dem 1,1 bis 1,8-fachen Wert des rechnerisch erforderlichen Füllvolumens entspricht.

2. Bremsanlage nach Anspruch 1, **dadurch gekennzeichnet, daß** das Ventil (4.2) fremdgesteuert ist und nach einer für den Retarderbetrieb sinnvollen Logik angesteuert wird.

3. Bremsanlage nach Anspruch 2, **dadurch gekennzeichnet, daß** das fremdgesteuerte Ventil (4.2) erst schließt, wenn der Steuerdruck im Behälter (4) am Ansteigen ist.

4. Bremsanlage nach Anspruch 2, **dadurch gekennzeichnet, daß** das fremdgesteuerte Ventil (4.2) erst wieder öffnet, wenn die Membran wieder in den Ausgangszustand vor der Bremsung zurückgedrückt ist.

5. Bremsanlage nach einem der Ansprüche 1 bis 4, **dadurch gekennzeichnet, daß** der gesamte erforderlichen Membranhub mittels wenigstens zweier Membranen aufgebracht wird.

6. Bremsanlage nach einem der Ansprüche 1 bis 5 **dadurch gekennzeichnet, daß** der Behälter (4) ganz oder teilweise aus nachgiebigem Material gebildet ist.

7. Bremsanlage nach einem der Ansprüche 1 bis 5, **dadurch gekennzeichnet, daß** der Behälter (4) einen Körper umschließt, dessen Wandung ganz oder teilweise aus elastischem Material besteht.

## Claims

1. A braking system, especially for a motor vehicle;
1.1 with a hydrodynamic retarder (1) comprising a rotor blade wheel (1.1) as well as a stator blade wheel (1.2);
1.2 with a system of conduits (20, 21) for supplying to or discharging from the retarder an operating medium;
1.3 with a container (4) for receiving the operating medium;
1.4 with a system for exerting a pressure on the operating medium contained in the container (4) for the purpose of changing the filling level of the working chamber of the retarder (1);
1.5 with the level of the operating medium in the container (4) being covered by a membrane (4.1);
1.6 with the actuator comprising a control system (22) for applying a control medium onto the membrane (4.1) on the side averted from the liquid level;
1.7 with the container (4) being connected to a secondary container (4.3) which is used as a compensation vessel and with a valve (4.2) being provided in the connecting conduit between container (4) and compensation vessel (4.3) which blocks when the membrane (4.1) is pressurized with the control medium;
1.8 with the membrane (4.1) being configured in such a way that the stroke volume of the membrane corresponds to 1.1 to 1.8 times the value of the rated required filling volume.

2. A braking system as claimed in claim 1, **characterized in that** the valve (4.2) is externally controlled and is triggered according to a logic system which is useful for retarder operation.

3. A braking system as claimed in claim 2, **characterized in that** the externally controlled valve (4.2) will only close when the control pressure in the container (4) is in the process of rising.

4. A braking system as claimed in claim 2, **characterized in that** the externally controlled valve (4.2) will only open again once the membrane has been pushed back again to the initial position prior to braking.

5. A braking system as claimed in one of the claims 1 to 4, **characterized in that** the entire required membrane stroke is applied by means of at least two membranes.

6. A braking system as claimed in one of the claims 1 to 5, **characterized in that** the container (4) is formed entirely or partly of resilient material.

7. A braking system as claimed in one of the claims 1 to 5, **characterized in that** the container (4) encloses a body whose walls consist entirely or partly of elastic material.

## Revendications

1. Installation de freinage, en particulier pour un véhicule à moteur,
1.1 avec un retardateur hydrodynamique (1) qui présente une roue de rotor à aubes (1.1) et une roue de stator à aubes (1.2) ;
1.2 avec un système de conduites (20, 21) destinées à amener du fluide de travail vers le retardateur et à l'évacuer du retardateur ;
1.3 avec un réservoir (4) destiné à recevoir du fluide de travail ;
1.4 avec un système destiné à exercer une pression sur le fluide de travail contenu dans le réservoir (4) afin de modifier le niveau de remplissage de l'espace de travail du retardateur (1) ;
1.5 le niveau du fluide de travail dans le réservoir (4) étant couvert par une membrane (4.1) ;
1.6 l'actionneur comprenant un système de commande (22) pour appliquer un fluide de commande sur le côté de la membrane (4.1) opposé au niveau du liquide ;
1.7 le réservoir (4) étant raccordé à un réservoir secondaire (4.3) servant de réservoir d'équilibrage et une vanne (4.2) qui se ferme en cas de sollicitation de la membrane (4.1) par du fluide de commande étant prévue dans la conduite de communication entre le réservoir (4) et le réservoir d'équilibrage (4.3) ;
1.8 la membrane (4.1) étant conçue de telle sorte que le volume de course de la membrane corresponde à 1,1 à 1,8 fois le volume de remplissage nécessaire déterminé par le calcul.

2. Installation de freinage selon la revendication 1, **caractérisée en ce que** la vanne (4.2) est commandée de l'extérieur et commandée selon une logique pertinente pour le fonctionnement du retardateur.

3. Installation de freinage selon la revendication 2, **caractérisée en ce que** la vanne commandée de l'extérieur (4.2) ne se ferme que lorsque la pression de commande dans le réservoir (4) est en train d'augmenter.

4. Installation de freinage selon la revendication 2, **caractérisée en ce que** la vanne commandée de l'extérieur (4.2) ne se rouvre que lorsque la membrane est repoussée dans son état de départ avant le freinage.

5. Installation de freinage selon l'une quelconque des revendications 1 à 4, **caractérisée en ce que** la totalité de la course de membrane nécessaire est réalisée au moyen d'au moins deux membranes.

6. Installation de freinage selon l'une quelconque des revendications 1 à 5, **caractérisée en ce que** le réservoir (4) se compose entièrement ou partiellement de matériau souple.

7. Installation de freinage selon l'une quelconque des revendications 1 à 5, **caractérisée en ce que** le réservoir (4) entoure un corps dont la paroi se compose entièrement ou partiellement de matériau élastique.
